# EUROPEAN PATENT SPECIFICATION

(11) **EP 4 521 064 B1**
(45) Date of publication and mention of the grant of the patent: **23.09.2026**
(21) Application number: 23845456.5
(22) Date of filing: 21.07.2023
(51) Int. Cl.: G05D 1/229, G05D 1/246, G01C 21/00, G01C 21/30, G06F 16/23, G06F 16/29, G01C 21/20, G05D 107/60, G05D 109/10

(54) **METHOD AND APPARATUS FOR UPDATING VIRTUAL WALL, AND ELECTRONIC DEVICE AND STORAGE MEDIUM**
VERFAHREN UND VORRICHTUNG ZUR AKTUALISIERUNG EINER VIRTUELLEN WAND SOWIE ELEKTRONISCHE VORRICHTUNG UND SPEICHERMEDIUM
PROCÉDÉ ET APPAREIL DE MISE À JOUR DE PAROI VIRTUELLE, DISPOSITIF ÉLECTRONIQUE ET SUPPORT DE STOCKAGE

(30) Priority: 29.07.2022 CN 202210908256
(43) Date of publication of application: 12.03.2025
(73) Proprietor: Shenzhen Pudu Technology Co., Ltd., Shenzhen, Guangdong 518000 (CN)
(72) Inventor: LIU, Bingren, Shenzhen, Guangdong 518000 (CN)
(74) Representative: Appleyard Lees IP LLP
(86) International application number: PCT/CN2023/108624
(87) International publication number: WO 2024/022246

(56) References cited:
- CN-A- 106 990 779
- CN-A- 110 851 556
- CN-A- 111 360 808
- CN-A- 115 468 556
- JP-A- 2022 101 947
- US-A1- 2020 125 087
- US-A1- 2022 074 762

## Description

### TECHNICAL FIELD

The present disclosure relates to the field of robot technologies, and in particular, to a method and apparatus for updating a virtual wall, an electronic device, and a storage medium.

### BACKGROUND

Currently, when a robot is constructing a map, in order to prevent the robot from entering a region where no service points are provided, virtual walls may generally be added to the map. A virtual wall typically simulates a wall signal and feeds it back to the robot, indicating that there is a wall ahead and the robot cannot move forward. When a scope of the map is further extended, the robot may partially modify an original map to perform extended mapping. However, in the prior art, after the robot performs extended mapping and generates a new map, a virtual wall set in the original map (hereinafter referred to as an original virtual wall) may be used in the new map, but the original virtual wall may not be applicable to the new map. If the robot travels using the new map later, it may happen that the robot stays in front of the original virtual wall and cannot enter an extended region.

US20200125087A1 provides a virtual wall system for a robot, including: a movement device configured to control a robot to move; a first electronic map configured to describe information on environment where the robot is located; a virtual wall module configured to form a virtual wall to divide the first electronic map into zones; a storage device configured to store the first electronic map of the environment where the robot is located.

US20220074762A1 relates to a method for an autonomous mobile robot for the new exploration of an area already listed in a map of the robot. The method includes storing a map of a deployment area of an autonomous mobile robot, where the map contains orientation information, which represents the structure of the surroundings in the deployment area, and also meta information. The method further includes receiving a command via a communication unit of the robot, which causes the robot to start a new exploration of at least a part of the deployment area. The robot then explores again the at least one part of the deployment area, where the robot detects information regarding the structure of its surroundings in the deployment area by means of a sensor. The method further includes updating the map of the deployment area and storing the updated map for use in the robot navigation during a plurality of future robot interventions. The aforementioned update includes determining changes in the deployment area based on the information recorded during the exploration about the structure of the surroundings and the orientation information already stored in the map, and updating the orientation information and the meta information based on the determined changes.

### SUMMARY

According to various embodiments of the present disclosure, a method and apparatus for updating a virtual wall, an electronic device, and a storage medium are provided.

In a first aspect, embodiments of the present disclosure provide a method for updating a virtual wall. The method includes: performing extended mapping on an original map to obtain an extended map, where the original map includes M virtual walls, M being an integer greater than or equal to 1; according to one or more paths which are included in the extended map, detecting the legitimacy of each virtual wall among the M virtual walls in the extended map; and according to the legitimacy of each virtual wall in the extended map, updating the M virtual walls in the extended map to obtain a target extended map, where the target extended map includes N virtual walls among the M virtual walls, the N virtual walls being legitimate virtual walls in the extended map, and N being an integer greater than or equal to 0.

In a second aspect, embodiments of the present disclosure provide an apparatus for updating a virtual wall. The apparatus for updating a virtual wall includes: an acquisition unit, a detection unit, and a processing unit. The acquisition unit is configured to perform extended mapping on an original map to obtain an extended map. The original map includes M virtual walls, and M is an integer greater than or equal to 1. The detection unit is configured to, according to one or more paths which are included in the extended map, detect the legitimacy of each virtual wall among the M virtual walls in the extended map. The processing unit is configured to, according to the legitimacy of each virtual wall in the extended map, update the M virtual walls in the extended map, so as to obtain a target extended map. The target extended map includes N virtual walls among the M virtual walls, the N virtual walls are legitimate virtual walls in the extended map, and N is an integer greater than or equal to 0.

In a third aspect, embodiments of the present disclosure provide an electronic device, including a memory, a processor, and computer-readable instructions stored in the memory and executable on the processor. When the processor executes the computer-readable instructions, the electronic device implements the method for updating a virtual wall as described in the first aspect to any one possible implementation of the first aspect.

In a fourth aspect, embodiments of the present disclosure provide a computer-readable storage medium. The computer-readable storage medium stores computer-readable instructions. When the computer-readable instructions are run on a computer, a computer is caused to perform the method for updating a virtual wall as described in the first aspect to any one possible implementation of the first aspect.

In a fifth aspect, embodiments of the present disclosure provide a computer program product including computer-readable instructions. When the computer-readable instructions are run on a computer, a computer is caused to perform the method for updating a virtual wall as described in the first aspect to any one possible implementation of the first aspect.

In a sixth aspect, embodiments of the present disclosure provide an apparatus for updating a virtual wall. The apparatus for updating a virtual wall includes at least one processor. When the apparatus for updating a virtual wall runs, the processor executes computer-readable instructions stored in the apparatus for updating a virtual wall to cause the apparatus for updating a virtual wall to perform the method in any one of various possible designs in the first aspect as described above. For example, the apparatus for updating a virtual wall may be an electronic device or a component applied to an electronic device.

In a seventh aspect, embodiments of the present disclosure provide a chip. The chip includes a processor. The processor is configured to run the computer-readable instructions to implement the method for updating a virtual wall described in the first aspect or various possible implementations of the first aspect.

Details of one or more embodiments of the present disclosure are set forth in the following accompanying drawings and descriptions. Other features, objectives, and advantages of the present disclosure become obvious with reference to the specification, the accompanying drawings, and the claims.

### BRIEF DESCRIPTION OF THE DRAWINGS

In order to more clearly illustrate the technical solutions in embodiments of the present disclosure or the prior art, the accompanying drawings used in the description of the embodiments or the prior art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a schematic flowchart of a method for updating a virtual wall according to embodiments of the present disclosure;
FIG. 2 is a first schematic diagram of a process of updating a legitimate virtual wall according to embodiments of the present disclosure;
FIG. 3 is a second schematic diagram of the process of updating a legitimate virtual wall according to embodiments of the present disclosure;
FIG. 4 is a third schematic diagram of the process of updating a legitimate virtual wall according to embodiments of the present disclosure;
FIG. 5 is a schematic flowchart of detecting legitimacy of a virtual wall according to embodiments of the present disclosure;
FIG. 6 is a schematic structural diagram of an apparatus for updating a virtual wall according to embodiments of the present disclosure; and
FIG. 7 is a schematic structural diagram of an electronic device according to embodiments of the present disclosure.

### DETAILED DESCRIPTION

To facilitate understanding of the present disclosure, a more comprehensive description of the present disclosure will be given below with reference to the relevant accompanying drawings. Preferred embodiments of the present disclosure are given in the drawings. However, the present disclosure may be implemented in many different forms and is not limited to the embodiments described herein. Rather, these embodiments are provided to make the contents disclosed in the present disclosure more fully understood.

Unless defined otherwise, all technical and scientific terms used herein have the same meanings as would generally understood by those skilled in the technical field of the present disclosure. The terms used herein in the specification of the invention herein are for the purpose of describing specific embodiments only, and are not intended to limit the present disclosure. The term "and/or" used herein includes any and all combinations of one or more related listed items.

In order to illustrate the technical solutions described in the present disclosure, specific embodiments are provided below.

A method for updating a virtual wall provided in embodiments of present disclosure is applied to an electronic device. The electronic device may be a robot. The method may also be applied to an electronic device on a robot or applied to other electronic devices. For example, the method for updating a virtual wall may be applied to a mobile phone or a server. A virtual wall on an extended map is updated through the mobile phone, and the updated extended map is transmitted to the robot, so that the robot performs tasks according to the updated extended map. This embodiment is described subsequently based on an example in which the method for updating a virtual wall is applied to a robot.

The robot may be a delivery and guiding robot, a cleaning robot, a sweeping robot, a food delivery robot, or the like, which is not specifically limited in this embodiment.

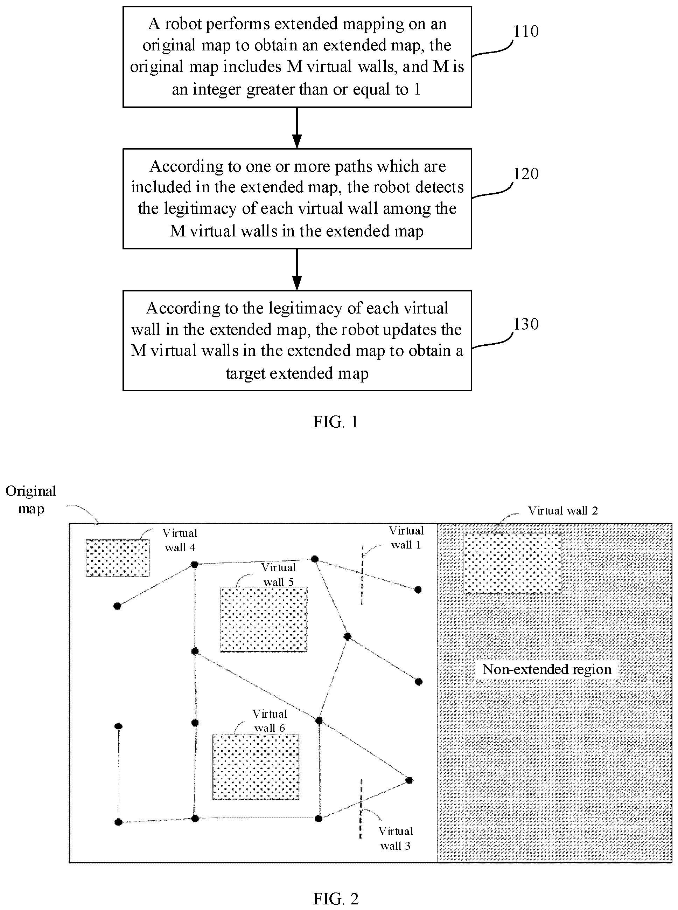

As shown in FIG. 1, FIG. 1 is a schematic flowchart of a method for updating a virtual wall according to embodiments of the present disclosure, including the following steps.

In step 110, a robot performs extended mapping on an original map to obtain an extended map, where the original map includes M virtual walls, M being an integer greater than or equal to 1.

It may be understood that a scene where the robot performs extended mapping may be a working scene such as a restaurant, a hospital, or a company, and may alternatively be a life scene such as an apartment or a community. This embodiment is described subsequently based on an example in which a scene requiring extended mapping is a working scene.

As an example, when performing extended mapping, the robot may scan the working scene through a LiDAR technology, and obtained scanning data is transmitted to the robot. Based on the received scanning data, the robot uses a composition algorithm built in the robot to add other regions generated by the scanning data to the original map and partially modify the map, so as to obtain the extended map. Correspondingly, the other regions include a new traversable region and a new obstacle avoidance region. The robot generates the extended map by performing extended mapping instead of reconstructing a map, which improves efficiency of map construction.

Exemplarily, description is based on an example in which the working scene for extended mapping is a restaurant. The original map may be interior of the restaurant, which includes a traversable region and an obstacle avoidance region, such as tables and wall pillars. Based on the interior of the restaurant, the robot adds part of regions outside the restaurant, including a new traversable region for the robot to travel, such as part of a commercial block outside the restaurant, and a new obstacle avoidance region, such as signs in the commercial block, so as to obtain the extended map. The extended map includes the interior of the restaurant and part of regions outside the restaurant.

Exemplarily, the obstacle avoidance region may include fixed obstacle avoidance regions such as tables and wall pillars, and/or movable obstacle avoidance regions such as walking people.

For the virtual wall provided in this embodiment, after the robot constructs a map and one or more paths are formed, the robot transmits, to a user, prompt information indicating setting of a virtual wall, and then adds, in response to an operation inputted by the user, the set virtual wall to the constructed map. Optionally, the user may alternatively not perform the operation of setting a virtual wall.

It should be explained that the virtual wall is a set virtual wall signal, and a physical barrier corresponding thereto does not exist in an actual scene. The signal may be fed back to the robot, indicating that there is a wall in front and the robot cannot move forward, so as to protect the robot. The virtual wall may typically be set in a region that is not open to the robot but can be reached by the robot, such as stairs or an open kitchen.

In step 120, according to one or more paths which are included in the extended map, the robot detects the legitimacy of each virtual wall among the M virtual walls in the extended map.

The robot may travel at a certain speed along one or more paths.

The method for forming the one or more paths included in the extended map and the method for detecting the legitimacy of each virtual wall among the M virtual walls in the extended map can be referred to in the description in the following embodiments, which are not described in detail herein.

In step 130, according to the legitimacy of each virtual wall in the extended map, the robot updates the M virtual walls in the extended map, so as to obtain a target extended map.

The target extended map includes N virtual walls among the M virtual walls, the N virtual walls are legitimate virtual walls in the extended map, and N is an integer greater than or equal to 0.

It may be understood that when N is 0, it indicates that the M virtual walls are all illegitimate virtual walls in the extended map, and the target extended map does not include any of the M virtual walls. Certainly, when N is an integer greater than 0, it indicates that N virtual walls among the M virtual walls are legitimate (i.e., legitimate virtual walls) in the extended map and M-N virtual walls are illegitimate in the extended map, i.e., illegitimate virtual walls. Therefore, the target extended map finally obtained does not include the M-N virtual walls.

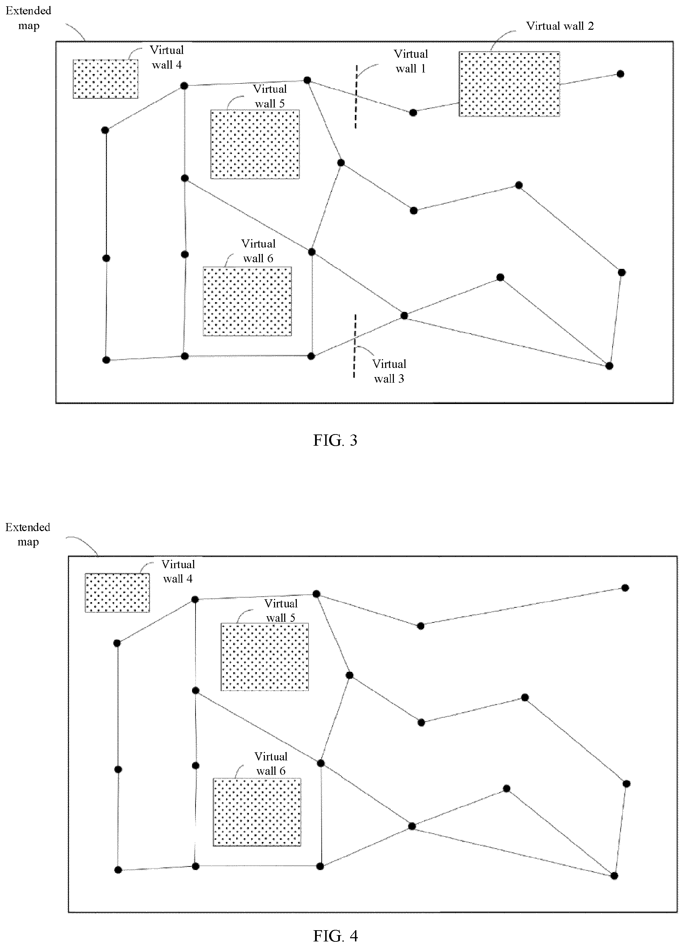

For example, as shown in FIG. 2, the original map includes a virtual wall 1 to a virtual wall 6. After the extended map is obtained, which is shown in FIG. 3, if it is detected that among the virtual wall 1 to the virtual wall 6, the virtual wall 1 to the virtual wall 3 are located on paths of the extended map, but the virtual wall 4 to the virtual wall 6 are not located on any path, it may be determined that the virtual wall 1 to the virtual wall 3 are illegitimate virtual walls in the extended map and the virtual wall 4 to the virtual wall 6 are legitimate virtual walls in the extended map. Therefore, the target extended map finally obtained as shown in FIG. 4 includes the virtual wall 4 to the virtual wall 6, but does not include the virtual wall 1 to the virtual wall 3, or the virtual wall 1 to the virtual wall 3 are invalid in the extended map. In other words, the virtual wall 1 to the virtual wall 3 are not displayed in the extended map.

The method for updating the M virtual walls in the extended map to obtain the target extended map can be referred to in the description in the following embodiments, which is not described in detail herein.

Embodiments of the present disclosure provide a method for updating a virtual wall. In the present disclosure, after extended mapping is performed on an original map and an extended map is obtained, legitimacy of M virtual walls included in the original map be detected according to one or more paths which are included in the extended map, and the M virtual walls in the extended map are updated. Therefore, the target extended map finally obtained not include illegitimate virtual walls. Through the solution of the present disclosure, after the robot performs extended mapping, hindrance to movement of the robot due to illegitimate virtual walls in the extended map can be effectively prevented.

In an embodiment of the present disclosure, the extended map further includes at least one or more original service points in the original map. In this way, after the robot performs extended mapping on the original map, so as to obtain the extended map, the method provided in the embodiments of the present disclosure further includes: guiding, by the robot according to a region covered by the extended map, a user to set one or more extended service points. Then, the robot generates the one or more paths in the extended map according to the region covered by the extended map, the one or more original service points, and the one or more extended service points.

The one or more paths are topological paths generated using the original service points and the extended service points in the extended map as nodes, and a topological map is generated. In this way, the robot can move at a certain speed along the generated topological paths.

It should be explained that the topological map is formed by topological points and topological paths. The topological points represent important locations of the robot in an environment, such as dining tables, corners, doors, and elevators with different serial numbers, which may be expressed in the form of coordinates on the topological map. The topological path represents a path that the robot can move at a certain speed in a scene, such as an aisle or a corridor. A planning method for a topological map is mainly based on dimensionality reduction, that is, an identification and connectivity method that transforms high-dimensional, relatively complex spatial geometric paths into low-dimensional, relatively simple topological spaces.

Correspondingly, the original service points and the extended service points are represented as corresponding topological points in the topological map, and the one or more paths are represented as corresponding topological paths in the topological map.

As an example, after the robot constructs a map, service points are set on the constructed map through an operation inputted by the user. After constructing the map, the robot transmits, to the user, prompt information indicating setting of service points, and then add, in response to an operation inputted by the user, the set service points to the constructed map. Optionally, the user may alternatively not perform the operation of setting service points.

Exemplarily, the robot may move at a certain speed along the one or more paths formed in the working scene, such as the interior of the restaurant and part of regions outside the restaurant, and reach the location of each service point.

In a possible implementation of the present disclosure, before the robot performs extended mapping on an original map to obtain an extended map, determination of extended mapping may be achieved in the following manner.

The robot acquires an extended mapping instruction. Then, the robot determines to perform extended mapping on the original map according to the extended mapping instruction.

As an example, the user may input the extended mapping instruction to the robot according to a requirement for extended mapping. Optionally, an electronic screen that may receive user instructions is mounted on the robot. In a case that the user determines that there is a need to perform extended mapping on the original map, the user may input the extended mapping instruction to the electronic screen, so that the robot determines to perform extended mapping on the original map. It can be understood that, optionally, in a case that the robot has a function of communicating with another electronic device, the user inputs the extended mapping instruction to the electronic device according to a requirement for extended mapping, and the instruction is transmitted to the robot through a communication connection established between the robot and the electronic device, so that the robot determines to perform extended mapping on the original map.

It should be explained that the extended mapping instruction may be inputted manually by the user to the robot or the electronic device, or inputted in other manners such as voice. The input manner is not limited in the embodiments of the present disclosure.

Optionally, the requirement for extended mapping may be raised due to addition of a new service item to the robot, which expands a scope of services that the robot needs to cover.

Exemplarily, taking a delivery robot in a restaurant as an example, an original service item of the delivery robot is as follows: in the restaurant, the delivery robot delivers different items to tables with different serial numbers according to the serial numbers of the tables. Therefore, an original service scope of the delivery robot is the interior of the restaurant. When a new service item, such as greeting guests outside the restaurant, is added to the delivery robot, the original delivery robot is updated to a guiding delivery robot. Therefore, a service scope of the guiding delivery robot is the interior of the restaurant and a certain scope outside the restaurant. Optionally, the certain scope may be 50 m or 100 m, which is not limited in the embodiments of the present disclosure. Optionally, the certain scope may be set manually by the user according to the requirement for extended mapping, or the robot may provide the user with a scope selection for extended mapping. For example, the scope selection may be 50 m or 100 m, which is not limited in the embodiments of the present disclosure.

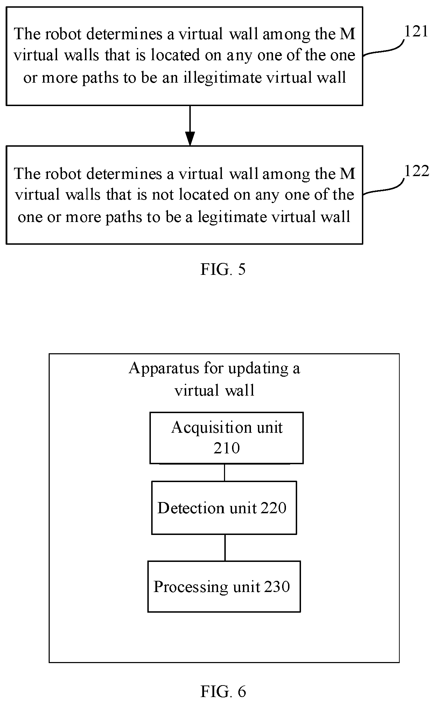

In a possible embodiment of the present disclosure, according to one or more paths which are included in the extended map, detecting, by the robot, the legitimacy of each virtual wall among the M virtual walls in the extended map, as shown in FIG. 5, includes the following steps.

In step 121, the robot determines a virtual wall among the M virtual walls that is located on any one of the one or more paths to be an illegitimate virtual wall.

As an example, the M virtual walls each may be set in a shape of straight line on the map. When one straight line intersects or coincides with the one or more paths, the virtual wall is determined to be an illegitimate virtual wall. That is, a virtual wall among the M virtual walls in shapes of straight lines that intersects or coincides with any one of the one or more paths is determined to be an illegitimate virtual wall. Optionally, the set straight line may alternatively be a dotted line. The shape of the virtual wall is not particularly limited in this embodiment.

As another example, the M virtual walls each may alternatively be set in a shape of polygonal region on the map. When the one or more paths pass through the polygonal region, or when the one or more paths overlap with the polygonal region, the virtual wall is determined to be an illegitimate virtual wall. That is, a virtual wall among the M virtual walls in the shape of polygonal region that is passed through by any one of the one or more paths is determined to be an illegitimate virtual wall, or a virtual wall among the M virtual walls in the shapes of polygonal region that overlaps with any one of the one or more paths is determined to be an illegitimate virtual wall. Optionally, the polygonal region may be a shape supported by the robot, such as a rectangle or a hexagon, and a size of the polygon may be directly adjusted. Optionally, the rectangular region may also be formed by straight lines. The shape of the virtual wall is not particularly limited in this embodiment.

In step 122, the robot determines a virtual wall among the M virtual walls that is not located on any one of the one or more paths to be a legitimate virtual wall.

In the above embodiments, a method for updating validity of a virtual wall can be implemented by detecting a positional relationship between virtual walls and paths.

In a possible embodiment of the present disclosure, according to the legitimacy of each virtual wall in the extended map, updating, by the robot, the M virtual walls in the extended map, so as to obtain the target extended map includes: setting, by the robot, a first virtual wall among the M virtual walls to be invalid in the extended map, and/or setting a second virtual wall among the M virtual walls to be valid in the extended map, so as to obtain the target extended map. The first virtual wall is an illegitimate virtual wall in the extended map, and the second virtual wall is a legitimate virtual wall in the extended map.

As an example, setting the first virtual wall among the M virtual walls to be invalid in the extended map may be deleting, by the robot, the first virtual wall in a case that the first virtual wall is an illegitimate virtual wall in the extended map. Optionally, before deleting the first virtual wall, the robot may output first query information to query the user whether the virtual wall is required to be deleted, which is intended to prevent the robot from accidentally deleting the virtual wall that the user needs.

As another example, setting the first virtual wall among the M virtual walls to be invalid in the extended map may be setting, by the robot, the first virtual wall to an unavailable state in a case that the first virtual wall is an illegitimate virtual wall in the extended map. Optionally, the unavailable state may be expressed as that the robot makes no obstacle avoidance response to the virtual wall. Optionally, the unavailable state may alternatively be expressed as that the virtual wall moves from the extended map to another region. Optionally, before setting the first virtual wall to the unavailable state, the robot may output second query information to query the user whether there is a need to set the virtual wall to the unavailable state. Optionally, the user may choose to restore the virtual wall in the unavailable state. This is intended to prevent the robot from accidental deletion.

The target extended map includes original service points, extended service points, one or more paths, and a second virtual wall.

In the above embodiments, illegitimate virtual walls in the extended map can be effectively and rapidly filtered out by setting the first virtual wall among the M virtual walls to be invalid in the extended map, and/or setting the second virtual wall among the M virtual walls to be valid in the extended map.

Correspondingly, in a possible embodiment of the present disclosure, before or after the robot obtains the target extended map, the method provided in the embodiments of the present disclosure further includes: outputting, by the robot, first prompt information, where the first prompt information is configured to prompt the user about current information of the extended map and guide the user to set a virtual wall in the extended map. Then, the robot detects an operation of setting a virtual wall inputted by the user. Then, in response to the operation, the robot sets a third virtual wall in the extended map. Correspondingly, the target extended map further includes the third virtual wall. In this way, after the robot sets the first virtual wall among the M virtual walls to be invalid in the extended map, the method provided in the embodiments of the present disclosure further includes: outputting, by the robot, second prompt information, the second prompt information being configured to prompt the user that the first virtual wall has been set to be invalid in the extended map.

In a possible implementation of the present disclosure, the target extended map includes no illegitimate virtual wall. Correspondingly, no illegitimate virtual wall is displayed in the target extended map when the robot displays the target extended map.

Exemplarily, the robot may include an apparatus with a display interface. Through the apparatus, the first prompt information may be displayed on the display interface to prompt the user about current information in the extended map. Moreover, the extended map is displayed on the display interface, and guidance information is output to the user to prompt the user to set a virtual wall on the display interface. At the same time, response is made to the operation of the user, and the setting in the target extended map is shown to the user.

It is to be noted that the current information in the extended map indicates extension of the map before or after the target extended map is obtained.

Optionally, the virtual wall may be set to a shape of a straight line. Optionally, the virtual wall may be set to a shape of a polygon. Reference may be made to the description in the above embodiments, details are not described herein again.

The target extended map includes original service points, extended service points, one or more paths, a second virtual wall, and a third virtual wall.

Generally, extended mapping is performed on an original map, so as to obtain an extended map. The original map includes M virtual walls. M may alternatively be 0, i.e., the original map includes no virtual wall. When M is 0, i.e., when the original map includes no virtual wall, subsequent steps performed are generally different.

In a possible embodiment of the present disclosure, in a case that the original map includes no virtual wall, the method provided in the embodiments of the present disclosure includes the following steps.

The robot outputs third prompt information. The third prompt information is configured to guide the user to set a virtual wall in the extended map. The robot detects an operation of setting a virtual wall inputted by the user, and in response to the operation, sets a fourth virtual wall in the extended map, so as to obtain the target extended map.

Optionally, the method provided in the embodiments of the present disclosure may further include: performing, by the robot, service processing according to the extended map.

Exemplarily, a scene to which the robot may be applied may be a restaurant. In the original map, the robot moves along the one or more paths in the original map and can reach a designated service point region. Optionally, the robot may deliver items in this manner. When extended mapping is performed on the original map according to a user requirement, the extended map is obtained. Optionally, the user requirement may be to add a guiding function to the robot on the basis of item delivery. Correspondingly, the robot extends part of regions outside the restaurant to obtain the extended map. The robot may move in part of regions outside the restaurant according to the extended map, to perform corresponding guiding work.

As an example, after the one or more paths are generated in the extended map, the user is guided to set one or more extended service points again according to the region covered by the extended map, and the one or more paths are generated in the extended map according to the region covered by the extended map, the at least one original service point in the original map, and the one or more extended service points. It may be understood that the user is guided to set one or more extended service points again, and the paths in the extended map are updated again according to the region covered by the extended map, the at least one original service point in the original map, and the one or more extended service points, which can improve richness of the paths of the extended map.

Optionally, in a case that the above execution subject is not a robot, the method provided in the embodiments of the present disclosure may further include providing, by an electronic device such as a server or a mobile phone, the target extended map for the robot to trigger the robot to perform a related task according to the target extended map.

It may be understood that in order to implement the above functions, each device, such as the electronic device, includes corresponding structures and/or software modules to perform the functions. Those skilled in the art should easily realize that, based on the units and algorithm steps in each example described in the embodiments disclosed herein, the present disclosure can be implemented in the form of hardware or a combination of hardware and computer software. Whether a function is performed by hardware or computer software driving the hardware depends on specific application and design constraints of the technical solution. Those skilled in the art may implement the described functions using different methods for each specific application, but such implementation should not be considered beyond the scope of the present disclosure.

Functional units may be divided according to the above method examples in the embodiments of the present disclosure. For example, each functional unit may be divided corresponding to each function, or two or more functions may be integrated into one processing unit. The above integrated units may be implemented in the form of hardware or software functional units. It is to be noted that the division of units in the embodiments of the present disclosure is illustrative and is only a logical function division. In actual implementation, there may be other division manners.

The method in the embodiments of the present disclosure is described above with reference to FIG. 1 to FIG. 5. An apparatus implementing the above method provided in the embodiments of the present disclosure is described below. Those skilled in the art can understand that methods and apparatuses can be combined and referenced with each other. The apparatus for updating a virtual wall provided in the embodiments of the present disclosure can perform the steps performed by the electronic device in the method for updating a virtual wall.

In a case that the integrated units are used, FIG. 6 shows the apparatus for updating a virtual wall as referred to in the above embodiments. The apparatus for updating a virtual wall may be an electronic device or an apparatus applied to an electronic device, such as a chip or a processing circuit. The apparatus for updating a virtual wall may include an acquisition unit 210, a detection unit 220, and a processing unit 230.

In an optional implementation, the apparatus for updating a virtual wall may further include a storage unit configured to store program code and data of the apparatus for updating a virtual wall.

In an example, the apparatus for updating a virtual wall is an electronic device or a chip applied to an electronic device. The acquisition unit 210 is configured to perform extended mapping on an original map, so as to obtain an extended map. The original map includes M virtual walls. M is an integer greater than or equal to 1. The detection unit 220 is configured to, according to one or more paths which are included in the extended map, detect the legitimacy of each virtual wall among the M virtual walls in the extended map. The processing unit 230 is configured to, according to the legitimacy of each virtual wall in the extended map, update the M virtual walls in the extended map, so as to obtain a target extended map. The target extended map includes N virtual walls among the M virtual walls. The N virtual walls are legitimate virtual walls in the extended map. N is an integer greater than or equal to 0.

In a possible implementation, the processing unit 230 is further configured to set a first virtual wall among the M virtual walls to be invalid in the extended map, and/or set a second virtual wall among the M virtual walls to be valid in the extended map, so as to obtain the target extended map. The first virtual wall is an illegitimate virtual wall in the extended map, and the second virtual wall is a legitimate virtual wall in the extended map.

In a possible implementation, before or after the target extended map is obtained, the processing unit 230 is further configured to output first prompt information. The first prompt information is configured to prompt the user about current information of the extended map and guide the user to set a virtual wall in the extended map. An operation of setting a virtual wall inputted by the user is detected. In response to the operation, a third virtual wall is set in the extended map. Correspondingly, the target extended map further includes the third virtual wall. Subsequent to setting the first virtual wall among the M virtual walls to be invalid in the extended map, the processing unit 230 is further configured to: output second prompt information. The second prompt information is used to prompt the user that the first virtual wall has been set to be invalid in the extended map.

In a possible implementation of the present disclosure, after the original map is extended to obtain the extended map, the acquisition unit 210 is further configured to guide, according to a region covered by the extended map, the user to set one or more extended service points. The one or more paths are generated in the extended map according to the region covered by the extended map, the one or more original service points, and the extended service points.

The processing unit 230 may be a processor or a controller, which may be, for example, a central processing unit, a general-purpose processor, a digital signal processor, an application-specific integrated circuit, a field programmable gate array or another programmable logic device, a transistor logic device, a hardware component, or any combination thereof. The processing unit may implement or execute various exemplary logical blocks, modules, and circuits described with reference to content disclosed in the present disclosure. Alternatively, the processor may be a combination for implementing a computing function, for example, a combination of one or more microprocessors, or a combination of a digital signal processor and a microprocessor. The storage module may be a memory.

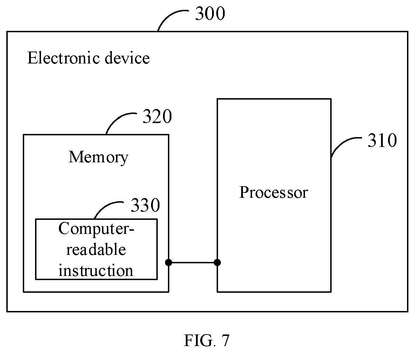

Further referring to FIG. 7, FIG. 7 is a schematic structural diagram of an electronic device 300 according to embodiments of the present disclosure. As shown in FIG. 7, the electronic device 300 in the embodiments include at least one processor 310 (only one processor is shown in FIG. 7), a memory 320, and computer-readable instructions 330 stored in the memory 320 and executable on the at least one processor 310, such as a data processing program. The processor 310, when executing the computer-readable instructions 330, implements steps in any one of the above method embodiments. The processor 310, when executing the computer-readable instructions 330, implements steps in any one of the embodiments of the data processing method. The processor 310, when executing the computer-readable instructions 330, implements functions of the modules/units in the apparatus embodiments, such as functions of the units 210 to 230 shown in FIG. 6.

Optionally, the structure of the electronic device 300 as shown in FIG. 7 may further include a memory. The memory may be a read-only memory (ROM) or another type of static storage device that can store static information and instructions, or a random access memory (RAM) or another type of dynamic storage device that can store information and instructions, or an electrically erasable programmable read-only memory (EEPROM), a compact disc read-only memory (CD-ROM) or another compact disc storage, optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that is accessible to a computer, but is not limited thereto. The memory may alternatively be integrated with the processor.

The memory is configured to store computer-readable instructions for executing the solutions in the present disclosure, and the processor controls the execution. The processor is configured to execute the computer-readable instructions stored in the memory, so as to implement the method for updating a virtual wall provided in the following embodiments of the present disclosure.

Optionally, the computer-readable instructions in the embodiments of the present disclosure may alternatively be referred to as application code, which is not specifically limited in the embodiments of the present disclosure.

In one aspect, a computer-readable storage medium is provided. The computer-readable storage medium stores computer-readable instructions. When the computer-readable instructions are run, functions performed by the electronic device 300 in FIG. 7 are implemented.

In one aspect, a computer program product including computer-readable instructions is provided. The computer program product includes computer-readable instructions. When the computer-readable instructions are run, functions performed by the electronic device 300 in FIG. 7 are implemented.

In one aspect, embodiments of the present disclosure provide a chip. The chip is applied to the electronic device 300. The chip includes at least one processor. The processor is configured to run computer-readable instructions to implement functions performed by the electronic device 300 in FIG. 7.

In the above embodiments, all or some of the foregoing embodiments may be implemented by software, hardware, firmware, or any combination thereof. When software is used to implement the embodiments, the foregoing embodiments may be implemented all or partially in a form of a computer program product. The computer program product includes one or more computer-readable instructions. When the computer-readable instructions are loaded and executed on a computer, the procedures or functions in the embodiments of the present disclosure are all or partially generated. The computer may be a general-purpose computer, a special-purpose computer, a computer network, a network device, a user equipment, or another programmable apparatus. The computer-readable instructions may be stored in a computer-readable storage medium or may be transmitted from one computer-readable storage medium to another computer-readable storage medium. For example, the computer-readable instructions may be transmitted from one website, computer, server, or data center to another website, computer, server, or data center in a wired or wireless manner. The computer-readable instructions may be any usable medium accessible to the computer, or a data storage device, such as a server or a data center, integrating one or more usable media. The usable medium may be a magnetic medium, for example, a floppy disk, a hard disk, or a magnetic tape; an optical medium, for example, a digital video disc (DVD); or a semiconductor medium, for example, a solid state drive (SSD).

Although the present disclosure is described with reference to the embodiments, in a process of implementing the present disclosure that claims protection, those skilled in the art may understand and implement other variations of the disclosed embodiments by viewing the accompanying drawings, disclosed content, and the appended claims. In the claims, the word "comprising" does not exclude other components or steps, and the word "a/an" or "one" does not exclude more than one. A single processor or another unit may implement several functions enumerated in the claims. Some measures are recorded in dependent claims that are different from each other, but this does not mean that these measures cannot be combined to produce a better effect.

## Claims

1. A method for updating a virtual wall, comprising:
performing extended mapping on an original map to obtain an extended map, wherein the original map comprises M virtual walls, M being an integer greater than or equal to 1 (step 110);
according to one or more paths which are comprised in the extended map, detecting the legitimacy of each virtual wall among the M virtual walls in the extended map (step 120); and
according to the legitimacy of each virtual wall in the extended map, updating the M virtual walls in the extended map to obtain a target extended map (step 130), wherein the target extended map comprises N virtual walls among the M virtual walls, the N virtual walls being legitimate virtual walls in the extended map, N being an integer greater than or equal to 0;
wherein the extended map further comprises at least one or more original service points in the original map, and the method further comprises:
guiding a user to set one or more extended service points according to a region covered by the extended map; and
generating the one or more paths in the extended map according to the region covered by the extended map, the one or more original service points, and the extended service points,
wherein according to the one or more paths which are comprised in the extended map, detecting the legitimacy of each virtual wall among the M virtual walls in the extended map (step 120) comprises one or more of the following:
determining a virtual wall among the M virtual walls that is located on any one of the one or more paths to be an illegitimate virtual wall (step 121); or
determining a virtual wall among the M virtual walls that is not located on any one of the one or more paths to be a legitimate virtual wall (step 122).

2. The method for updating a virtual wall according to claim 1, wherein
in a case that the M virtual walls are in shapes of straight lines, determining the virtual wall among the M virtual walls that is located on any one of the one or more paths to be the illegitimate virtual wall (step 121) comprises:
determining a virtual wall among the M virtual walls in shapes of straight lines that intersects or coincides with any one of the one or more paths to be the illegitimate virtual wall; or
in a case that the M virtual walls are in shapes of polygonal regions, determining the virtual wall among the M virtual walls that is located on any one of the one or more paths to be the illegitimate virtual wall (step 121) comprises:
determining a virtual wall among the M virtual walls in shapes of polygonal regions that is passed through by any one of the one or more paths to be the illegitimate virtual wall; or
determining a virtual wall among the M virtual walls in shapes of polygonal regions that overlaps with any one of the one or more paths to be the illegitimate virtual wall.

3. The method for updating a virtual wall according to claim 1, wherein according to the legitimacy of each virtual wall in the extended map, updating the M virtual walls in the extended map to obtain the target extended map comprises:
setting a first virtual wall among the M virtual walls to be invalid in the extended map, and/or setting a second virtual wall among the M virtual walls to be valid in the extended map, so as to obtain the target extended map, the first virtual wall being an illegitimate virtual wall in the extended map, and the second virtual wall being a legitimate virtual wall in the extended map.

4. The method for updating a virtual wall according to claim 3, subsequent to setting the first virtual wall among the M virtual walls to be invalid in the extended map, further comprising:
outputting second prompt information, the second prompt information being configured to prompt that the first virtual wall has been set to be invalid in the extended map.

5. The method for updating a virtual wall according to claim 3, wherein setting the first virtual wall among the M virtual walls to be invalid in the extended map comprises any one of the following processing:
deleting the first virtual wall from the M virtual walls; or
setting the first virtual wall among the M virtual walls to an unavailable state; the unavailable state indicating that no obstacle avoidance response is made to the first virtual wall.

6. The method for updating a virtual wall according to claim 5, prior to deleting the first virtual wall from the M virtual walls, further comprising:
outputting first query information; the first query information being configured to query whether the first virtual wall is required to be deleted.

7. The method for updating a virtual wall according to claim 5, prior to setting the first virtual wall among the M virtual walls to the unavailable state, further comprising:
outputting second query information; the second query information being used to query whether the first virtual wall is required to be set to the unavailable state.

8. The method for updating a virtual wall according to claim 1, wherein prior to or subsequent to obtaining the target extended map, the method further comprises:
outputting first prompt information, the first prompt information being configured to prompt current information of the extended map and guide setting a virtual wall in the extended map;
detecting an input operation of setting a virtual wall; and
setting, in response to the operation, a third virtual wall in the extended map, the target extended map further comprising the third virtual wall.

9. The method for updating a virtual wall according to any one of claims 1 to 8, wherein in a case that the original map has no virtual walls, subsequent to performing extended mapping on the original map to obtain the extended map, the method further comprises:
outputting third prompt information, the third prompt information being configured to guide setting a virtual wall in the extended map;
detecting an input operation of setting a virtual wall; and
setting, in response to the operation, a fourth virtual wall in the extended map to obtain the target extended map.

10. The method for updating a virtual wall according to claim 9, wherein the method further comprises:
guiding a user to set one or more extended service points according to a region covered by the extended map; and
generating the one or more paths in the extended map according to the region covered by the extended map, at least one original service point in the original map, and the one or more extended service points.

11. An electronic device (300), configured to perform the method according to any one of claims 1 to 10.

12. A computer-readable storage medium, the computer-readable storage medium storing computer-readable instructions, wherein when the computer-readable instructions are called and executed by a processor, the method according to any one of claims 1 to 10 is implemented.

## Patentansprüche

1. Verfahren zum Aktualisieren einer virtuellen Wand, das Folgendes umfasst:
Durchführen einer erweiterten Kartierung auf einer Ausgangskarte, um eine erweiterte Karte zu erhalten, wobei die Ausgangskarte M virtuelle Wände umfasst, wobei M eine ganze Zahl größer als oder gleich 1 ist (Schritt 110);
in Abhängigkeit von einem oder mehreren Pfaden, die in der erweiterten Karte enthalten sind, Detektieren der Zulässigkeit jeder virtuellen Wand unter den M virtuellen Wänden in der erweiterten Karte (Schritt 120); und
in Abhängigkeit von der Zulässigkeit jeder virtuellen Wand in der erweiterten Karte Aktualisieren der M virtuellen Wände in der erweiterten Karte, um eine erweiterte Zielkarte zu erhalten (Schritt 130), wobei die erweiterte Zielkarte N virtuelle Wände unter den M virtuellen Wänden umfasst, wobei die N virtuellen Wände zulässige virtuelle Wände in der erweiterten Karte sind, wobei N eine ganze Zahl größer als oder gleich 0 ist;
wobei die erweiterte Karte ferner mindestens einen oder mehrere Ausgangsbedienpunkte in der Ausgangskarte umfasst und das Verfahren ferner Folgendes umfasst:
Anleiten eines Benutzers beim Festlegen eines oder mehrerer erweiterter Bedienpunkte in Abhängigkeit von einer von der erweiterten Karte abgedeckten Region; und
Erzeugen des einen oder der mehreren Pfade in der erweiterten Karte in Abhängigkeit von der von der erweiterten Karte abgedeckten Region, dem einen oder den mehreren Ausgangsbedienpunkten und den erweiterten Bedienpunkten,
wobei in Abhängigkeit von dem einen oder den mehreren Pfaden, die in der erweiterten Karte enthalten sind, das Detektieren der Zulässigkeit jeder virtuellen Wand unter den M virtuellen Wänden in der erweiterten Karte (Schritt 120) einen oder mehrere der folgenden Schritte umfasst:
Bestimmen einer virtuellen Wand unter den M virtuellen Wänden, die sich auf einem beliebigen des einen oder der mehreren Pfade befindet, als eine unzulässige virtuelle Wand (Schritt 121); oder
Bestimmen einer virtuellen Wand unter den M virtuellen Wänden, die sich nicht auf einem beliebigen des einen oder der mehreren Pfade befindet, als eine zulässige virtuelle Wand (Schritt 122).

2. Verfahren zum Aktualisieren einer virtuellen Wand nach Anspruch 1, wobei,
wenn die M virtuellen Wände in Formen von geraden Linien vorliegen, das Bestimmen der virtuellen Wand unter den M virtuellen Wänden, die sich auf einem beliebigen des einen oder der mehreren Pfade befindet, als die unzulässige virtuelle Wand (Schritt 121) Folgendes umfasst:
Bestimmen einer virtuellen Wand unter den M virtuellen Wänden in Formen von geraden Linien, die einen beliebigen des einen oder der mehreren Pfade schneidet oder mit diesem zusammenfällt, als die unzulässige virtuelle Wand; oder,
wenn die M virtuellen Wände in Formen von polygonalen Regionen vorliegen, das Bestimmen der virtuellen Wand unter den M virtuellen Wänden, die sich auf einem beliebigen des einen oder der mehreren Pfade befindet, als die unzulässige virtuelle Wand (Schritt 121) Folgendes umfasst:
Bestimmen einer virtuellen Wand unter den M virtuellen Wänden in Formen von polygonalen Regionen, die von einem beliebigen des einen oder der mehreren Pfade durchquert wird, als die unzulässige virtuelle Wand; oder
Bestimmen einer virtuellen Wand unter den M virtuellen Wänden in Formen von polygonalen Regionen, die mit einem beliebigen des einen oder der mehreren Pfade überlappt, als die unzulässige virtuelle Wand.

3. Verfahren zum Aktualisieren einer virtuellen Wand nach Anspruch 1, wobei in Abhängigkeit von der Zulässigkeit jeder virtuellen Wand in der erweiterten Karte das Aktualisieren der M virtuellen Wände in der erweiterten Karte, um die erweiterte Zielkarte zu erhalten, Folgendes umfasst:
Festlegen einer ersten virtuellen Wand unter den M virtuellen Wänden als ungültig in der erweiterten Karte und/oder Festlegen einer zweiten virtuellen Wand unter den M virtuellen Wänden als gültig in der erweiterten Karte, um die erweiterte Zielkarte zu erhalten, wobei die erste virtuelle Wand eine unzulässige virtuelle Wand in der erweiterten Karte ist und die zweite virtuelle Wand eine zulässige virtuelle Wand in der erweiterten Karte ist.

4. Verfahren zum Aktualisieren einer virtuellen Wand nach Anspruch 3, das nach dem Festlegen der ersten virtuellen Wand unter den M virtuellen Wänden als ungültig in der erweiterten Karte ferner Folgendes umfasst:
Ausgeben zweiter Hinweisinformationen, wobei die zweiten Hinweisinformationen dazu konfiguriert sind, darauf hinzuweisen, dass die erste virtuelle Wand als ungültig in der erweiterten Karte festgelegt worden ist.

5. Verfahren zum Aktualisieren einer virtuellen Wand nach Anspruch 3, wobei das Festlegen der ersten virtuellen Wand unter den M virtuellen Wänden als ungültig in der erweiterten Karte einen der folgenden Verarbeitungsschritte umfasst:
Löschen der ersten virtuellen Wand in den M virtuellen Wänden; oder
Versetzen der ersten virtuellen Wand unter den M virtuellen Wänden in einen nicht verfügbaren Zustand; wobei der nicht verfügbare Zustand angibt, dass keine Hindernisvermeidungsreaktion auf die erste virtuelle Wand erfolgt.

6. Verfahren zum Aktualisieren einer virtuellen Wand nach Anspruch 5, das vor dem Löschen der ersten virtuellen Wand in den M virtuellen Wänden ferner Folgendes umfasst:
Ausgeben erster Abfrageinformationen; wobei die ersten Abfrageinformationen dazu konfiguriert sind, abzufragen, ob die erste virtuelle Wand gelöscht werden muss.

7. Verfahren zum Aktualisieren einer virtuellen Wand nach Anspruch 5, das vor dem Versetzen der ersten virtuellen Wand unter den M virtuellen Wänden in den nicht verfügbaren Zustand ferner Folgendes umfasst:
Ausgeben zweiter Abfrageinformationen; wobei die zweiten Abfrageinformationen dazu verwendet werden, abzufragen, ob die erste virtuelle Wand in den nicht verfügbaren Zustand versetzt werden muss.

8. Verfahren zum Aktualisieren einer virtuellen Wand nach Anspruch 1, wobei das Verfahren vor oder nach dem Erhalten der erweiterten Zielkarte ferner Folgendes umfasst:
Ausgeben erster Hinweisinformationen, wobei die ersten Hinweisinformationen dazu konfiguriert sind, auf aktuelle Informationen der erweiterten Karte hinzuweisen und beim Festlegen einer virtuellen Wand in der erweiterten Karte anzuleiten;
Detektieren eines Eingabevorgangs zum Festlegen einer virtuellen Wand; und
Festlegen, als Reaktion auf den Vorgang, einer dritten virtuellen Wand in der erweiterten Karte, wobei die erweiterte Zielkarte ferner die dritte virtuelle Wand umfasst.

9. Verfahren zum Aktualisieren einer virtuellen Wand nach einem der Ansprüche 1 bis 8, wobei das Verfahren, wenn die Ausgangskarte keine virtuellen Wände aufweist, nach dem Durchführen einer erweiterten Kartierung auf der Ausgangskarte, um die erweiterte Karte zu erhalten, ferner Folgendes umfasst:
Ausgeben dritter Hinweisinformationen, wobei die dritten Hinweisinformationen dazu konfiguriert sind, beim Festlegen einer virtuellen Wand in der erweiterten Karte anzuleiten;
Detektieren eines Eingabevorgangs zum Festlegen einer virtuellen Wand; und
Festlegen, als Reaktion auf den Vorgang, einer vierten virtuellen Wand in der erweiterten Karte, um die erweiterte Zielkarte zu erhalten.

10. Verfahren zum Aktualisieren einer virtuellen Wand nach Anspruch 9, wobei das Verfahren ferner Folgendes umfasst:
Anleiten eines Benutzers beim Festlegen eines oder mehrerer erweiterter Bedienpunkte in Abhängigkeit von einer von der erweiterten Karte abgedeckten Region; und
Erzeugen des einen oder der mehreren Pfade in der erweiterten Karte in Abhängigkeit von der von der erweiterten Karte abgedeckten Region, mindestens einem Ausgangsbedienpunkt in der Ausgangskarte und dem einen oder den mehreren erweiterten Bedienpunkten.

11. Elektronische Vorrichtung (300), die dazu konfiguriert ist, das Verfahren nach einem der Ansprüche 1 bis 10 durchzuführen.

12. Computerlesbares Speichermedium, wobei das computerlesbare Speichermedium computerlesbare Anweisungen speichert, wobei, wenn die computerlesbaren Anweisungen durch einen Prozessor aufgerufen und ausgeführt werden, das Verfahren nach einem der Ansprüche 1 bis 10 implementiert wird.

## Revendications

1. Procédé de mise à jour d'un mur virtuel, le procédé comprenant les étapes suivantes :
effectuer une cartographie étendue sur une carte originale afin d'obtenir une carte étendue, la carte originale comprenant M murs virtuels, M étant un entier supérieur ou égal à 1 (étape 110) ;
selon un ou plusieurs chemins compris dans la carte étendue, détecter la légitimité de chaque mur virtuel parmi les M murs virtuels dans la carte étendue (étape 120) ; et
selon la légitimité de chaque mur virtuel dans la carte étendue, mettre à jour les M murs virtuels dans la carte étendue afin d'obtenir une carte étendue cible (étape 130), la carte étendue cible comprenant N murs virtuels parmi les M murs virtuels, les N murs virtuels étant des murs virtuels légitimes dans la carte étendue, N étant un nombre entier supérieur ou égal à 0 ;
où la carte étendue comprend en outre au moins un ou plusieurs points de service d'origine dans la carte d'origine, et le procédé comprend en outre les étapes suivantes :
guider un utilisateur pour définir un ou plusieurs points de service étendus en fonction d'une région couverte par la carte étendue ; et
générer les un ou plusieurs chemins dans la carte étendue en fonction de la région couverte par la carte étendue, des un ou plusieurs points de service d'origine et des points de service étendus,
où, selon les un ou plusieurs chemins qui sont compris dans la carte étendue, la détection de la légitimité de chaque mur virtuel parmi les M murs virtuels dans la carte étendue (étape 120) comprend une ou plusieurs des étapes suivantes :
déterminer un mur virtuel parmi les un ou plusieurs M murs virtuels qui se trouve sur l'un quelconque des chemins comme étant un mur virtuel non légitime (étape 121) ; ou
déterminer un mur virtuel parmi les M murs virtuels qui ne se trouve sur aucun des un ou plusieurs chemins comme étant un mur virtuel légitime (étape 122).

2. Procédé de mise à jour d'un mur virtuel selon la revendication 1, dans lequel
dans le cas où les M murs virtuels ont une forme de droite, la détermination du mur virtuel parmi les M murs virtuels situé sur l'un quelconque des un ou plusieurs chemins pour comme étant le mur virtuel non légitime (étape 121) comprend l'étape suivante :
déterminer un mur virtuel parmi les M murs virtuels en forme de droite qui intersecte ou coïncide avec l'un quelconque des un ou plusieurs chemins comme étant le mur virtuel non légitime ;
ou
dans le cas où les M murs virtuels ont des formes de régions polygonales, la détermination du mur virtuel parmi les M murs virtuels situé sur l'un quelconque des un ou plusieurs chemins comme étant le mur virtuel non légitime (étape 121) comprend les étapes suivantes :
déterminer un mur virtuel parmi les M murs virtuels en forme de régions polygonales traversé par l'un quelconque des un ou plusieurs chemins comme étant le mur virtuel non légitime ; ou
déterminer un mur virtuel parmi les M murs virtuels en forme de régions polygonales qui chevauche l'un quelconque des un ou plusieurs chemins comme étant le mur virtuel non légitime ;

3. Procédé de mise à jour d'un mur virtuel selon la revendication 1, dans lequel, conformément à la légitimité de chaque mur virtuel dans la carte étendue, la mise à jour des M murs virtuels dans la carte étendue pour obtenir la carte étendue cible comprend l'étape suivante :
définir un premier mur virtuel parmi les M murs virtuels comme étant non valide dans la carte étendue, et/ou définir un deuxième mur virtuel parmi les M murs virtuels comme étant valide dans la carte étendue, de manière à obtenir la carte étendue cible, le premier mur virtuel étant un mur virtuel non légitime dans la carte étendue, et le deuxième mur virtuel étant un mur virtuel légitime dans la carte étendue.

4. Procédé de mise à jour d'un mur virtuel selon la revendication 3, le procédé, postérieurement au fait de définir le premier mur virtuel parmi les M murs virtuels comme étant non valide dans la carte étendue, comprenant en outre l'étape suivante :
délivrer en sortie des deuxièmes informations d'invite, les deuxièmes informations d'invite étant configurées pour indiquer que le premier mur virtuel a été défini comme non valide dans la carte étendue.

5. Procédé de mise à jour d'un mur virtuel selon la revendication 3, dans lequel le fait de définir le premier mur virtuel parmi les M murs virtuels comme étant non valide dans la carte étendue comprend l'un quelconque des traitements suivants :
supprimer le premier mur virtuel des M murs virtuels ; ou
définir le premier mur virtuel parmi les M murs virtuels à un état non disponible ; l'état non disponible indiquant qu'aucune réponse d'évitement d'obstacle n'est effectuée au premier mur virtuel.

6. Procédé de mise à jour d'un mur virtuel selon la revendication 5, le procédé, avant de supprimer le premier mur virtuel des M murs virtuels, comprenant en outre l'étape suivante :
délivrer en sortie des premières informations de requête ; les premières informations de requête étant configurées pour demander si le premier mur virtuel doit être supprimé.

7. Procédé de mise à jour d'un mur virtuel selon la revendication 5, le procédé, avant de définir le premier mur virtuel parmi les M murs virtuels à l'état non disponible, comprenant en outre l'étape suivante :
délivrer en sortie des deuxièmes informations de requête ; les deuxièmes informations de requête étant utilisées pour demander si le premier mur virtuel doit être défini à l'état non disponible.

8. Procédé de mise à jour d'un mur virtuel selon la revendication 1, dans lequel, avant ou après l'obtention de la carte étendue cible, le procédé comprend en outre les étapes suivantes :
délivrer en sortie des premières informations d'invite, les premières informations d'invite étant configurées pour demander des informations actuelles de la carte étendue et guider la définition d'un mur virtuel dans la carte étendue ;
détecter une opération d'entrée de définition d'un mur virtuel ; et
définir, en réponse à l'opération, un troisième mur virtuel dans la carte étendue, la carte étendue cible comprenant en outre le troisième mur virtuel.

9. Procédé de mise à jour d'un mur virtuel selon l'une quelconque des revendications 1 à 8, dans lequel, dans le cas où la carte originale ne comporte pas de murs virtuels, à la suite de l'exécution d'une cartographie étendue sur la carte d'origine pour obtenir la carte étendue, le procédé comprend en outre les étapes suivantes :
délivrer en sortie des troisièmes informations d'invite, les troisièmes informations d'invite étant configurées pour guider la définition d'un mur virtuel dans la carte étendue ;
détecter une opération d'entrée de définition d'un mur virtuel ; et
définir, en réponse à l'opération, un quatrième mur virtuel dans la carte étendue pour obtenir la carte étendue cible.

10. Procédé de mise à jour d'un mur virtuel selon la revendication 9, le procédé comprenant en outre les étapes suivantes :
guider un utilisateur pour définir un ou plusieurs points de service étendus en fonction d'une région couverte par la carte étendue ; et
générer les un ou plusieurs chemins dans la carte étendue en fonction de la région couverte par la carte étendue, d'au moins un point de service d'origine dans la carte d'origine et des un ou plusieurs points de service étendus.

11. Dispositif électronique (300), configuré pour mettre en œuvre le procédé selon l'une quelconque des revendications 1 à 10.

12. Support de stockage lisible par ordinateur, le support de stockage lisible par ordinateur stockant des instructions lisibles par ordinateur, où, lorsque les instructions lisibles par ordinateur sont appelées et exécutées par un processeur, le procédé selon l'une quelconque des revendications 1 à 10 est mis en œuvre.
